# EUROPÄISCHE PATENTSCHRIFT

(11) **EP 0 404 100 B1**
(45) Veröffentlichungstag und Bekanntmachung des Hinweises auf die Patenterteilung: **20.01.1993**
(21) Anmeldenummer: 90111643.4
(22) Anmeldetag: 20.06.1990
(51) Int. Cl.: A01F 15/08, F16C 13/02, F16C 35/06

(54) **Lagerung einer Walze in einem Gestell, insbesondere einer Verteilwalze in einer Rundballenpresse**
Bearing of a roller in a frame, specially of a divider roller in a rotobaler
Palier d'un rouleau dans un châssis, notamment d'un rouleau diviseur dans une presse à balle rondes

(30) Priorität: 23.06.1989 US 370536
(43) Veröffentlichungstag der Anmeldung: 27.12.1990
(73) Patentinhaber: DEERE & COMPANY, Moline, Illinois 61265 (US)
(72) Erfinder: Anstey, Henry Dennis, Ottumwa, Iowa 52501 (US); Ardueser, William Albert, Ottuwa, Iowa 52501 (US)
(74) Vertreter: Feldmann, Bernhard

(56) Entgegenhaltungen:
- EP-A- 0 225 398
- CH-A- 463 204
- DE-A- 3 024 143
- US-A- 4 311 226

## Beschreibung

Die Erfindung bezieht sich auf eine Lagerung einer Walze in einem Gestell, insbesondere einer Verteilwalze in einer Rundballenpresse, wobei die Walze zumindest an ihren beiden Enden zur Aufnahme je eines einen Innenring und einen Außenring aufweisenden Lagers hohlförmig ausgebildet ist und der Innenring eine unrunde Öffnung aufweist, in der sich ein komplementär ausgebildetes Gegenstück befindet, das mit dem Gestell befestigt ist.

Herkömmliche Verteilwalzen in Rundballenpressen sind mit einer glatten Oberfläche ausgerüstet, an deren beiden Enden sich eine spiralförmige Wendel befindet, und dienen zum Ausbreiten von Umhüllungsmaterial, mit dem ein in der Rundballenpresse rund gewickelter Ballen aus Heu oder Stroh umhüllt wird. Die Verteilwalzen erstrecken sich über die gesamte Breite der Rundballenpresse und sind in deren seitlichen Tragteilen bzw. Seitenwänden drehbar gelagert. Die Lagerung besteht im einzelnen aus einer Achse mit sechskantigem Querschnitt, deren Längsmittelachse mit der Längsmittelachse der Verteilwalze zusammenfällt und die durch die jeweiligen Innenringe der beiden die Verteilwalze drehbar aufnehmenden Lager geführt ist. Die Innenringe weisen hierzu entsprechend ausgebildete Öffnungen auf. Zum Festlegen der Verteilwalze dienen durch die Tragteile der Rundballenpresse hindurchgesteckte und in die beiden Stirnseiten der sechskantigen Achse einschraubbare Schrauben.

Diese Lagerung hat sich als effektiv erwiesen, ist aber nicht billig, und eine Montage der Verteilwalze durch eine Person ist nur unter Zuhilfenahme von Hebemitteln möglich (John Deere Rundballenpresse 540).

Die mit der Erfindung zu lösende Aufgabe wird darin gesehen, die Lagerung derartiger oder ähnlicher Walzen vorteilhafter und ferner die Montage einfacher zu gestalten. Diese Aufgabe ist dadurch gelöst worden, daß das Gegenstück als herkömmliche Schraube mit einem unrunden Schraubenkopf und einem Gewinde aufweisenden Schaftteil ausgebildet ist, der sich durch das Gestell erstreckt und über eine auf ihn aufgeschraubte Mutter gesichert ist. Auf diese Weise kann auf die bisher übliche durch die Walze geführte und an ihren Stirnseiten mit Gewindebohrungen versehene Achse verzichtet werden. Die Lagerung erfolgt in einfacher Art durch zwei mit ihren unrunden Schraubenköpfen in die Innenringe der Lager einsetzbare Schrauben, deren Schaftteile sich beidseitig durch die Gestellwände erstrecken und über Muttern gesichert werden.

Zweckmäßig sind die beiden Schraubenköpfe und damit auch die Aufnahmeöffnungen in den Innenringen der Lager sechskantförmig ausgebildet.

Nach einem weiteren Vorschlag der Erfindung, insbesondere zur einfachen Montage der Walze, ist das Gestell beidseitig zur Aufnahme der jeweiligen Schraube mit einer schlüssellochähnlichen Öffnung versehen, wobei der größere Lochteil über dem kleineren Lochteil angeordnet ist und eine Lochweite aufweist, die ein Durchführen des Schraubenkopfes bzw. der Mutter ermöglicht. Hierdurch kann die Walze von einer Person ohne Zuhilfenahme von Hebewerkzeugen dadurch montiert werden, daß zunächst an einer Seite eine Schraube mit ihrem Sechskantkopf in die entsprechend ausgebildete Öffnung in dem Innenring eingesetzt und die Mutter vorne auf den Schaftteil leicht aufgeschraubt wird. Danach wird die Walze schräg angehoben, der Schaftteil mit der aufgeschraubten Mutter durch den größeren Lochteil gesteckt, der Schaftteil in den kleineren Lochteil abgesenkt und die Mutter ganz oder etwas angezogen. Sodann wird die andere Seite der Walze zu ihrer zugehörigen schlüssellochähnlichen Öffnung in der entsprechenden Gestellseite ausgerichtet, die Schraube mit ihrem Kopf durch den größeren Lochteil gesteckt und in die komplementär ausgebildete Öffnung im Innenring des zugehörigen Lagers eingesetzt, der Schaftteil in den kleineren Lochteil abgesenkt und die Lagerstelle durch Aufschrauben der Mutter und Anziehen beider Muttern gesichert.

Vorteilhaft ist jeder Schraubenkopf, damit er nicht zu weit in den Innenring gesteckt werden kann, an seinem dem Schaftteil zugelegenen Ende mit einem Ringflansch versehen und in den Innenring des Lagers einpreßbar.

Um ein einfaches Anziehen der Muttern zu ermöglichen bzw. um ein Drehen des Innenrings bei der Montage zu verhindern, ist jeder Schaftteil der Schraube in dem kleineren Lochteil undrehbar aufgenommen. Dies kann durch entsprechende Abflachungen oder andere Mittel wie Kontermuttern etc. erfolgen.

Im einzelnen kann die Walze über die beiden in sie eingesetzten Schrauben von zwei Seitenwänden an einer Rundballenpresse aufgenommen sein. Die Erfindung ist aber nicht auf die Anwendung bei Rundballenpressen begrenzt, sondern kann leicht überall dort Verwendung finden, wo umlaufende Walzen keine allzu großen Kräfte aufnehmen müssen.

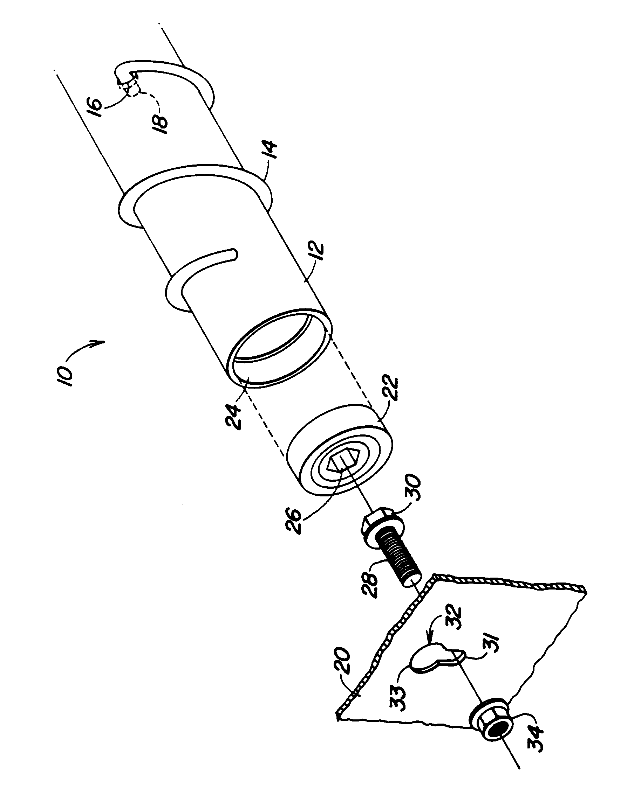

In der Zeichnung mit einer einzigen Figur ist ein nachfolgend näher erläutertes Ausführungsbeispiel der Erfindung dargestellt.

Die Zeichnung zeigt den Endteil einer Walze 10, wie sie in Rundballenpressen zum Ausbreiten von in ihr eingeführtem Umhüllungsmaterial Verwendung finden können. Das Umhüllungsmaterial dient zum Umwickeln eines in der Rundballenpresse gewickelten Ballens aus Heu, Stroh oder dergleichen und kann aus Netzwerk aus Garn oder plastischem Vollmaterial bestehen. Die Walze 10 weist eine glatte Mantelfläche 12 auf, ist hohlförmig ausgebildet und zumindest im Bereich ihrer beiden Endteile mit spiralförmigen sowie gegenläufigen Wendeln 14 versehen, die zum Ausbreiten zu den Enden hin des von ihr erfaßten Umhüllungsmaterials dienen, das heißt die Walzen spreizen das Umhüllungsmaterial und halten es auch beim Abwickelvorgang auf dieser Breite.

Jede Wendel 14 besteht aus einem spiralförmig gewundenen Draht mit vorzugsweise rundem Querschnitt. Die Windungen haben, wenn sie sich noch nicht auf der Mantelfläche 12 der Walze 10 befinden, einen Innendurchmesser, der etwas kleiner ist als der Außendurchmesser der Mantelfläche 12, so daß die Wendel 14 nach ihrem Aufsetzen auf die Walze gegen die Mantelfläche 12 fest anliegt. Zum Aufspannen werden die Wendeln 14 so gedrückt, daß sie die Tendenz haben, sich auseinanderzuwickeln, wobei sich ihr Innendurchmesser vergrößert und ein Aufschieben auf die jeweiligen Enden der Walze 10 möglich wird. Mit Abstand zu dem jeweiligen Ende ist in die Mantelfläche 12 der Walze je eine sich radial erstreckende Öffnung 16 eingearbeitet, in die ein jeweils radial abgebogenes inneres Ende 18 der entsprechenden Wendel 14 eingesetzt werden kann.

Werden die Walzen 10 zum Ausbreiten von Umhüllungsmaterial in Rundballenpressen eingesetzt, so erfolgt ihr Antrieb durch den Reibkontakt mit dem Umhüllungsmaterial, wenn letzteres von der Material- oder Zuführwalze über Einzugsrollen abgezogen oder den sich in der Ballenkammer drehenden Ballen eingezogen wird. Die Walze 10 selbst erstreckt sich zwischen gegenüberliegenden Tragteilen 20 oder Seitenteilen bzw. -wänden, von denen in der Zeichnung nur eine dargestellt ist. Sie ist in diesen Tragteilen 10 drehbar angeordnet, wozu zwei identische Lagerelemente gehören, von denen ebenfalls nur ein einziges in der Zeichnung dargestellt ist. Jedes Lagerelement weist ein Lager 22, vorzugsweise ein Kugellager, mit einem Außenring auf, der in eine ringförmige Ausdrehung 24 eingepreßt ist, die ihrerseits in den inneren Stirnseiten der hohlen Walze 10 gedreht werden. Die Innenringe eines jeden Lagers 22 sind beide mit einer sechskantförmig ausgebildeten Bohrung 26 versehen und dienen zur Aufnahme eines entsprechend sechskantförmig ausgebildeten Kopfes 30 einer mit einem Ringflansch versehenen Schraube 28. Hierbei kann jeder Kopf 30 in die zugehörige Bohrung 26 eingepreßt werden. Die mit Gewinde versehenen Schaftteile der Schrauben 28 erstrecken sich von den beiden Stirnseiten der Walze 10 nach außen durch den kleineren Lochteil 31 einer schlüssellochähnlich ausgebildeten Öffnung 32 in den beiden Tragteilen 20, wobei die größeren Lochteile 33 der schlüssellochähnlichen Öffnungen 32 vertikal über den kleineren Lochteilen 31 liegen. Auf die Schaftteile der Schrauben 28, die so ausgebildet sein können, daß sie sich in den kleineren Lochteilen 33 nicht drehen lassen, werden Muttern 34 aufgeschraubt, die ebenfalls einen Ringflansch aufweisen können.

Aus Vorstehendem folgt, daß die herkömmlichen Kopfschrauben mit Ringflansch eine wirksame und vor allen Dingen kostengünstige drehbare Anordnung der Walze 10 in den Tragteilen 20 ermöglichen. Natürlich brauchen die Köpfe 30 der Schrauben 28 und die Bohrungen 26 in den Innenringen nicht sechskantförmig ausgebildet zu sein, sie müssen nur so geformt oder angeordnet werden, daß sie sich nicht gegenseitig verdrehen können.

Die Montage der Walze 10 wird durch die schlüssellochähnliche Ausbildung der beiden Öffnungen 32 in den Tragteilen 20 erleichtert. Insbesondere kann dadurch bereits vor der Montage eine der Schrauben 28 in eine Bohrung 26 des Lagerinnenringes mit ihrem Kopf 30 eingesetzt und eine Mutter 34 auf das Ende ihres Schaftteils aufgeschraubt werden. Danach wird die sich zwischen den Tragteilen 20 befindliche Walze 10 derart schräg angehoben, daß die aufgeschraubte Mutter 34 durch den größeren Lochteil 33 gesteckt werden kann. Die Walze mit der eingesetzten Schraube 28 kann dann so weit abgesenkt werden, bis ihr Schaftteil in dem kleineren Lochteil 31 aufliegt. Sodann wird die Walze an ihrem anderen Ende angehoben und zu dem größeren Lochteil 33 der Öffnung in dem gegenüberliegenden Tragteil 20 ausgerichtet, damit der Kopf der anderen Schraube 28 durch den größeren Lochteil in die Bohrung 26 des zweiten Lagerinnenringes eingesetzt werden kann. Danach wird auch dieses Ende der Walze 10 in den kleineren Lochteil abgesenkt, die zugehörige Mutter 34 wird aufgeschraubt, und beide Muttern 34 werden fest angezogen. Über Kontermuttern bzw. Distanzstücke läßt sich, falls erforderlich, die Position der Walze 10 korrigieren.

## Patentansprüche

1. Lagerung einer Walze (10) in einem Gestell, insbesondere einer Verteilwalze in einer Rundballenpresse, wobei die Walze (10) zumindest an ihren beiden Enden zur Aufnahme je eines einen Innenring und einen Außenring aufweisenden Lagers (22) hohlförmig ausgebildet ist und der Innenring eine unrunde Öffnung aufweist, in der sich ein komplementär ausgebildetes Gegenstück befindet, das mit dem Gestell befestigt ist, dadurch gekennzeichnet, daß das Gegenstück als herkömmliche Schraube (28) mit einem unrunden Schraubenkopf (30) und einem Gewinde aufweisenden Schaftteil ausgebildet ist, der sich durch das Gestell erstreckt und über eine auf ihn aufgeschraubte Mutter (34) gesichert ist.

2. Lagerung nach Anspruch 1, dadurch gekennzeichnet, daß der Schraubenkopf (30) sechskantförmig ausgebildet ist.

3. Lagerung nach Anspruch 1 oder 2, dadurch gekennzeichnet, daß das Gestell zur Aufnahme der Schraube (28) mit einer schlüssellochähnlichen Öffnung (32) versehen ist, wobei der größere Lochteil (33) über dem kleineren Lochteil (31) angeordnet ist und eine Lochweite aufweist, die ein Durchführen des Schraubenkopfes (30) bzw. der Mutter (34) ermöglicht.

4. Lagerung nach einem oder mehreren der vorherigen Ansprüche, dadurch gekennzeichnet, daß der Schraubenkopf (30) an seinem dem Schaftteil zugelegenen Ende mit einem Ringflansch versehen und in den Innenring des Lagers (22) einpreßbar ist.

5. Lagerung nach einem oder mehreren der vorherigen Ansprüche, dadurch gekennzeichnet, daß der Schaftteil der Schraube (28) in dem kleineren Lochteil (31) undrehbar aufgenommen ist.

6. Lagerung nach einem oder mehreren der vorherigen Ansprüche, dadurch gekennzeichnet, daß die Walze (10) über die beiden in sie eingesetzten Schrauben (28) von zwei Seitenwänden (20) an einer Rundballenpresse aufgenommen ist.

## Claims

1. Mounting for a roller (10) in a frame, in particular a distributing roller in a rotobaler, the roller (10) being constructed in hollow form at least at both its ends to receive in each case a bearing (22) having an inner race and an outer race and the inner race having a non-circular opening in which a complementarily formed counterpiece fixed to the frame is located, characterised in that the counterpiece is in the form of a conventional bolt (28) with a non-circular head (30) and a shank portion having a thread, the shank portion extending through the frame and being secured through the medium of a nut (34) screwed on to it.

2. Mounting according to claim 1, characterised in that the bolt head (30) is of hexagonal form.

3. Mounting according to claim 1 or 2, characterised in that the frame is provided with a keyhole-like aperture (32) for receiving the bolt (28), the larger part (33) of the aperture being arranged above the smaller part (31) of the aperture and having a width making it possible to pass the bolt head (30) or the nut (34) through it.

4. Mounting according to one or more of the preceding claims, characterised in that the bolt head (30) is provided with an annular flange at its end located towards the shank portion and can be forced into the inner race of the bearing (22).

5. Mounting according to one or more of the preceding claims, characterised in that the shank portion of the bolt (28) can be received non-rotatably in the smaller part (31) of the aperture.

6. Mounting according to one or more of the preceding claims, characterised in that the roller (10) is received by two side walls (20) on a rotobaler through the medium of the two bolts (28) inserted in the roller.

## Revendications

1. Montage d'un rouleau (10) dans un châssis, notamment d'un rouleau diviseur dans une presse à balles rondes, le rouleau (10) étant réalisé creux au moins à ses deux extrémités afin de recevoir un palier respectif (22) présentant une bague intérieure et une bague extérieure, et la bague intérieure présentant une ouverture non ronde, dans laquelle se trouve un pendant de forme complémentaire, qui est fixé au châssis, **caractérisé** en ce que le pendant est un boulon conventionnel (28) présentant une tête de boulon non ronde (30) et un corps de boulon fileté, qui s'étend à travers le châssis et est bloqué par un écrou (34) vissé sur ce corps de boulon.

2. Montage selon la revendication 1, **caractérisé** en ce que la tête de boulon (30) est hexagonale.

3. Montage selon la revendication 1 ou 2, **caractérisé** en ce que le châssis est pourvu d'une ouverture (32) en forme de trou de serrure pour recevoir le boulon (28), la partie plus grande (33) du trou étant disposée au-dessus de la partie plus petite (31) du trou et présentant une largeur permettant le passage de la tête de boulon (30) ou de l'écrou (34).

4. Montage selon une ou plusieurs des revendications précédentes, **caractérisé** en ce que la tête de boulon (30) est pourvue d'une collerette annulaire à son extrémité tournée vers le corps de boulon, et elle peut être emmanchée dans la bague intérieure du palier (22).

5. Montage selon une ou plusieurs des revendications précédentes, **caractérisé** en ce que le corps du boulon (28) est reçu sans possibilité de rotation dans la partie plus petite (31) du trou.

6. Montage selon une ou plusieurs des revendications précédentes, **caractérisé** en ce que le rouleau (10) est reçu par deux parois latérales (20) d'une presse à balles rondes au moyen des deux boulons (28) qui sont emmanchés dans ce rouleau.
